# EUROPEAN PATENT APPLICATION

(11) **EP 4 534 284 A1**
(43) Date of publication of application: **09.04.2025**
(21) Application number: 23811514.1
(22) Date of filing: 21.04.2023
(51) Int. Cl.: B32B 27/00, B32B 27/10, B32B 27/30, B32B 29/00, C09J 11/06, C08L 83/05, C08L 83/08, C09D 183/05, C09D 183/07, C09J 183/05, C09J 183/07, C08K 3/24, C09D 7/20, C09D 7/63, C09J 7/40

(54) **ADDITION-CURABLE MOLD-RELEASING SILICONE COMPOSITION FOR SILICONE ADHESIVE**

(30) Priority: 24.05.2022 JP 2022084219
(71) Applicant: SHIN-ETSU CHEMICAL CO., LTD., Tokyo 1000005 (JP)
(72) Inventor: OGIKUBO, Shunya, Annaka-shi, Gunma 379-0224 (JP); YASUDA, Hiroyuki, Annaka-shi, Gunma 379-0224 (JP)
(74) Representative: Sonnenhauser, Thomas Martin
(86) International application number: PCT/JP2023/015871
(87) International publication number: WO 2023/228636

(57) **Abstract**

The present invention is a releasable addition-curable silicone composition for a silicone adhesive including: (A) a fluorine-containing organopolysiloxane having at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography; (B) an organohydrogenpolysiloxane having at least three hydrogen atoms (SiH groups) bonded to a silicon atom in one molecule; (C) a platinum group metal-based catalyst; and (D) a non-fluorine-based solvent. The present invention provides a silicone composition for a releasing agent that provides a cured film having dilutablity with a non-fluorine-based solvent, high coatability to a film base material, high adhesiveness, small release force, and a small decrease in residual adhesion ratio.

## Description

### TECHNICAL FIELD

The present invention relates to a releasable addition-curable silicone composition for a silicone adhesive that is dilutable in a non-fluorine-based solvent (i.e., an organic solvent that does not have a fluorine atom in the molecule) including a non-halogen-based solvent (i.e., an organic solvent that does not have a halogen atom in the molecule), exhibits good releasability to silicone adhesives, and is excellent in transparency and adhesiveness.

### BACKGROUND ART

Conventionally, in order to prevent adhesion or sticking between a base material such as paper, plastic film or the like and a pressure-sensitive adhesive substance such as a silicone adhesive or the like, a cured film of a silicone composition is formed on the outer surface of the base material to impart releasability to the pressure-sensitive adhesive substance, and this material is generally referred to as a release paper.

Among the above-mentioned pressure-sensitive adhesive substances, a silicone adhesive that is mainly composed of organopolysiloxane is excellent in heat resistance, cold resistance, chemical resistance, electrical insulation, and low toxicity, and used in a wide range of applications. A silicone adhesive has very strong adhesive strength, so in order for adhesive tapes and labels coated with it to be easily peeled off from the base material, it is necessary to make a silicone cured film to be formed on the base material excellent in releasability.

Patent Document 1 discloses an organopolysiloxane composition having a fluorine-containing substituent represented by CₙF₂ₙ₊₁CH₂CH₂- ("n" is an integer of 1 or more) as a silicone composition that provides a silicone cured film with excellent releasability. Additionally, Patent Document 2 proposes an organopolysiloxane composition having a fluorine-containing substituent represented by F-[CF(CF₃)CF₂O]ₙCF(CF₃)CF₂OCH₂CH₂CH₂- ("n" is an integer from 1 to 5).

When applying these organopolysiloxane compositions onto a base material, they are diluted with an organic solvent and then used. In this case, from the viewpoint of solubility of a fluorine-containing organopolysiloxane and coatability to a base material, a fluorine-based solvent (i.e., an organic solvent having a fluorine atom in its molecule) is preferably used as an organic solvent.

However, although a fluorine-based solvent can sufficiently dilute a fluorine-containing organopolysiloxane, it is expensive and has a problem of adversely affecting the natural environment if it is diffuses into the atmosphere.

Patent Document 3 proposes a silicone composition for a release paper, the silicone composition having a fluorine-containing substituent, as a silicone composition that is dilutable with a non-fluorine-based solvent and provides a silicone cured film with excellent releasability.

However, when this silicone composition for a releasing agent is dissolved in a non-fluorine-based solvent, its release force tends to be higher than when it is diluted with a fluorine-based solvent. Furthermore, although Patent Document 3 does not describe coatability or adhesiveness, in the case that a silicone composition for a release paper is dissolved in a non-fluorine-based solvent, the composition may have worse coatability onto a base material than when diluted with a fluorine-based solvent. When the coatability to a base material is poor, the areas where the base material is not covered with the silicone composition for a releasing agent may come into contact with an adhesive, and the release force becomes significantly heavy.

In addition, the silicone composition film for a release paper obtained through dissolving it in a non-fluorine-based solvent has low adhesiveness to a film base material, and the releasable layer may fall off from the base material as time passes.

Patent Document 4 proposes a method of adding a linear perfluoropolyether antifoaming agent to a silicone composition for a releasing agent as a method for improving coatability. However, because the linear perfluoropolyether antifoaming agent does not have a reactive functional group, it is not incorporated into the crosslinking and migrates to the adhesive layer side when the adhesive is peeled off, which may reduce the residual adhesion ratio.

In order to improve the adhesiveness, a method of adding a functional compound that interacts with the base material is known. However, because a base material-functional compound has low compatibility with the silicone composition, the compositions in which the base material-functional compound is added to a silicone composition suffer from a problem of separation of the base material-functional compound during long-term storage and transportation. When the separated composition is used as it is, its original performance may not be achieved. In addition, the base material-functional compound may migrate to the adhesive layer side when the adhesive is peeled off, reducing the residual adhesion ratio.

As described above, in the conventional technology, there is no known releasable silicone composition for an adhesive that has: dilutablity with a non-fluorine-based solvent, sufficient coatability to cover a base material completely, adhesiveness preventing falling off from a base material after time passes, releasability that exhibit light release even from an adhesive having strong adhesive strength, and residual adhesion ratio, at the same time.

### CITATION LIST

### PATENT LITERATURE

Patent Document 1: JP H5-7434 B
Patent Document 2: JP H4-76391 B
Patent Document 3: JP H7-18185 A
Patent Document 4: JP 2004-300414 A

### SUMMARY OF INVENTION

### TECHNICAL PROBLEM

The present invention has been made in view of the above-described problem. An object of the present invention is to provide a silicone composition for a releasing agent that has dilutablity with a non-fluorine-based solvent, and provides a cured film having high coatability to a film base material, high adhesiveness, small release force, and a small decrease in residual adhesion ratio.

### SOLUTION TO PROBLEM

To solve the above problems, the present invention provides a releasable addition-curable silicone composition for a silicone adhesive comprising the following components (A) to (D):
(A) a fluorine-containing organopolysiloxane having at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography: 100 parts by mass;
(B) an organohydrogenpolysiloxane having at least three hydrogen atoms (SiH groups) bonded to a silicon atom in one molecule: an amount at which a mole ratio of the hydrogen atoms (SiH groups) bonded to a silicon atom in the component (B) relative to the alkenyl groups in the component (A) is 0.1 to 15;
(C) a platinum group metal-based catalyst: 0.5 to 5,000 ppm in terms of the mass of the platinum group metal relative to the component (A); and
(D) a non-fluorine-based solvent: 100 to 20,000 parts by mass.

Such a releasable addition-curable silicone composition for a silicone adhesive can provide a silicone composition for a releasing agent that has dilutablity with a non-fluorine-based solvent, and provides a cured film having high coatability to a film base material, high adhesiveness, small release force, and a small decrease in residual adhesion ratio.

Further, the mole ratio of the hydrogen atoms (SiH groups) bonded to a silicon atom in the component (B) relative to the alkenyl groups in the component (A) is preferably 0.5 to 5.

Such a releasable addition-curable silicone composition for a silicone adhesive can provide a silicone composition for a releasing agent having better coatability, adhesiveness, and releasability.

Further, the component (D) is preferably a non-fluorine-based solvent having an SP value of 10.0 or less.

Such a releasable addition-curable silicone composition for a silicone adhesive can provide a silicone composition for a releasing agent in which the component (A) is dissolved more sufficiently.

Further, the component (D) is preferably at least one kind selected from the group consisting of a hydrocarbon solvent, a ketone solvent, an ether solvent, and an ester solvent.

Such a releasable addition-curable silicone composition for a silicone adhesive can provide a silicone composition for a releasing agent in which the component (A) is dissolved more sufficiently.

Further, the present invention provides a release film having a cured material layer formed of the releasable addition-curable silicone composition for a silicone adhesive on at least one outer surface of a film base material.

Such a release film can provide a release film that is excellent in releasability.

Further, the present invention provides a release paper having a cured material layer formed of the releasable addition-curable silicone composition for a silicone adhesive on at least one outer surface of a paper base material.

Such a release paper can provide a release paper that is excellent in releasability.

### ADVANTAGEOUS EFFECTS OF INVENTION

As described above, according to the present invention, it is possible to provide a silicone composition for a releasing agent that has dilutablity with a non-fluorine-based solvent, and provides a cured film having high coatability to a film base material, high adhesiveness, small release force, and a small decrease in residual adhesion ratio.

### DESCRIPTION OF EMBODIMENTS

As a result of their diligent study to achieve the above objectives, the inventors have found: that, by mixing (A) a fluorine-containing organopolysiloxane having at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography, (B) an organohydrogenpolysiloxane having at least three hydrogen atoms (SiH groups) bonded to a silicon atom in one molecule, (C) a platinum group metal-based catalyst, and (D) a non-fluorine-based solvent, in a specific blending ratio, it is possible to obtain silicone composition for a releasing agent providing a cured film with coatability to a film base material, high adhesiveness, small release force, and a small decrease in residual adhesion ratio; that this composition can be used to produce a releasable silicone cured film at a low cost without no risk of air pollution because of containing no fluorine-based solvent; and further that this cured film is excellent in water repellency, oil repellency, and heat resistance, and have completed the present invention.

Specifically, the present invention is a releasable addition-curable silicone composition for a silicone adhesive comprising the following components (A) to (D):
(A) a fluorine-containing organopolysiloxane having at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography: 100 parts by mass;
(B) an organohydrogenpolysiloxane having at least three hydrogen atoms (SiH groups) bonded to a silicon atom in one molecule: an amount at which a mole ratio of the hydrogen atoms (SiH groups) bonded to a silicon atom in the component (B) relative to the alkenyl groups in the component (A) is 0.1 to 15;
(C) a platinum group metal-based catalyst: 0.5 to 5,000 ppm in terms of the mass of the platinum group metal relative to the component (A); and
(D) a non-fluorine-based solvent: 100 to 20,000 parts by mass.

Hereinafter, the present invention will be specifically described, but the present invention is not limited thereto.

### [Component (A)]

The component (A) fluorine-containing organopolysiloxane has at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography, and functions as a main agent (a base polymer) of the inventive releasable addition-curable silicone composition for a silicone adhesive.

The component (A) fluorine-containing organopolysiloxane may be either linear or branched. However, the organopolysiloxane used particularly preferably is a linear fluorine-containing organopolysiloxane represented by the following formula (1), in which the main chain of the molecular chain includes repeating of difunctional diorganosiloxane units; some or all of the diorganosiloxane units in the main chain have a fluorine-containing substituent bonded to a silicon atom (i.e., a monovalent hydrocarbon group which may contain an ether-bonded oxygen atom "-O-" in which some or all of the hydrogen atoms bonded to a carbon atom are substituted with a fluorine atom); the both molecular chain ends are blocked with a triorganosiloxy group having an alkenyl group (an alkenyldiorganosiloxy group, an dialkenylorganosiloxy group, or a trialkenylsiloxy group); and there are at least two alkenyl groups bonded to a silicon atom at both molecular chain end in one molecule, or at least two alkenyl groups that are bonded to a silicon atom at both molecular chain ends and a silicon atom at the non-end of the molecular chain (in the middle of the molecular chain) in one molecule.

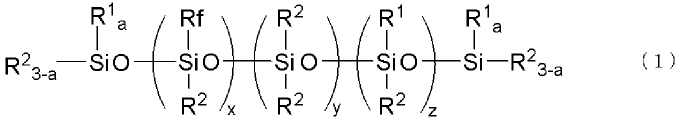

Here, R¹ is an alkenyl group having 2 to 10 carbon atoms, and specific examples thereof include a vinyl group, an allyl group, a propenyl group, an isopropenyl group, a butenyl group, an isobutenyl group, a hexenyl group, a cyclohexenyl group, etc.

R² is an unsubstituted or substituted monovalent hydrocarbon group having 1 to 10 carbon atoms and excluding unsaturated aliphatic groups, and specific examples thereof include: alkyl groups such as a methyl group, an ethyl group, a propyl group, an isopropyl group, a butyl group, an isobutyl group, a sec-butyl group, a tert-butyl group, a pentyl group, a hexyl group, a cyclohexyl group, a heptyl group, an octyl group, a 2-ethylhexyl group, a nonyl group, and a decyl group; aryl groups such as a phenyl group and a tolyl group; aralkyl groups such as a benzyl group and a phenylethyl group; and hydroxypropyl group or cyanoethyl group in which some or all of the hydrogen atoms of these groups is substituted with a hydroxyl group, a cyano group, or the like.

In the above formula, "a" is 1, 2 or 3; "x", "y" and "z" are each an integer of x≥1, y≥0 and z≥0, preferably, "x" is an integer of 10 to 150, "y" is an integer of 50 to 400 and "z" is an integer of 0 to 10, more preferably, "x" is an integer of 50 to 130, "y" is an integer of 100 to 350, "z" is an integer of 0 to 5, and the value of x+y+z is appropriately controlled so that the fluorine content in the molecule is 25 to 50 mass%.

In the formula (1), the fluorine-containing substituent (i.e., a monovalent hydrocarbon group which may contain an ether-bonded oxygen atom "-O-" in which some or all of the hydrogen atoms bonded to a carbon atom are substituted with a fluorine atom) represented by Rf is exemplified by monovalent fluorine-containing substituents represented by formula (2) below (i.e., a perfluoroalkyl group, a polyfluoroalkyl group, a perfluorooxyalkyl group (a monovalent perfluoropolyether group) or a polyfluorooxyalkyl group (a monovalent polyfluoropolyether group)).

Formula (2): F(CHₙ₁F₂₋ₙ₁O)ₚ₁(CHₙ₂F₂₋ₙ₂CHₙ₃F₂₋ₙ₃O)_{b2}(CHₙ₄F₂₋ₙ₄CHₙ₅F₂₋ₙ₅CHₙ₆F_{2- n6})_{b3}[CF(CF₃)CHᵤ₇F₂₋ₙ₇O]_{b4}[CHₙ₈F₂₋ₙ₈CF(CF₃)O]_{b5}(CHₙ₉F₂₋ₙ₉CHₙ₁₀F_{2- n10}CHₙ₁₁F₂₋ₙ₁₁CHₙ₁₂F₂₋ₙ₁₂)_{b6}[CF(CF₃)CHₙ₁₃F₂₋ₙ₁₃CHₙ₁₄F₂₋ₙ₁₄]_{b7}[CHₙ₁₅F_{2- n16}CF(CF₃)CHₙ₁₇F₂₋ₙ₁₇]_{b8}[CHₙ₁₈F₂₋ₙ₁₈CHₙ₁₉F₂₋ₙ₁₉CF(CF₃)]_{b9}(CHₙ₂₀F_{2- n20}CHₙ₂₁F₂₋ₙ₂₁CHₙ₂₂F₂₋ₙ₂₂CHₙ₂₃F₂₋ₙ₂₃CHₙ₂₄F₂₋ₙ₂₄)_{b10}[CF(CF₃)CHₙ₂₅F_{2- n25}CHₙ₂₆F₂₋ₙ₂₆CHₙ₂₇F₂₋ₙ₂₇]_{b11}[CHₙ₂₈F₂₋ₙ₂₈CF(CF₃)CHₙ₂₉F2-ₙ₂₉CHₙ₃₀F_{2- n30}]_{b12}[CHₙ₃₁F₂₋ₙ₃₁CHₙ₃₂F₂₋ₙ₃₂CF(CF₃)CHₙ₃₃F_{2-n33]b13}[CHₙ₃₄F_{2- n34}CHₙ₃₅F₂₋ₙ₃₅CHₙ₃₆F₂₋ₙ₃₆CF(CF₃)]_{b14}(CHₙ₃₇F₂₋ₙ₃₇CHₙ₃₈F₂₋ₙ₃₈CHₙ₃₉F_{2- n39}CHₙ₄₀F₂₋ₙ₄₀CHₙ₄₁F₂₋ₙ₄₂CHₙ₄₃F₂₋ₙ₄₃)_{b15}[CF(CF₃)CHₙ₄₄F₂₋ₙ₄₄CHₙ₄₅F_{2- n45}CHₙ₄₆F₂₋ₙ₄₆CHₙ₄₇F₂₋ₙ₄₇O]_{b16}[CHₙ₄₈F₂₋ₙ₄₈CF(CF3)CHₙ₄₉F₂₋ₙ₄₉CHₙ₅₀F_{2- n50}CHₙ₅₁F₂₋ₙ₅₁O]_{b17}[CHₙ₅₂F₂₋ₙ₅₂CHₙ₅₃F₂₋ₙ₅₃CF(CF₃)CHₙ₅₄F₂₋ₙ₅₄CHₙ₅₅F_{2- 155}O]_{b18}[CHₙ₅₆F₂₋ₙ₅₆CHₙ₅₇F₂₋ₙ₅₇CHₙ₅₈F₂₋ₙ₅₈CF(CF₃)CHₙ₅₉F_{2- n59}O]_{b19}[CHₙ₆₀F₂₋ₙ₆₀CHₙ₆₁F₂₋ₙ₆₁CHₙ₆₂F₂₋ₙ₆₂CHₙ₆₃F_{2- n63}CF(CF₃)O]_{b20}[CF(CF₃)]_{b21}(CHₙ₆₄F₂₋ₙ₆₄)_{b22}-X- [CF(CF₃)]_{b23}(CHₙ₆₅F₂₋ₙ₆₅)_{b24}-

In the formula, b1 to b24 are integers of 0 or more. However, at least one of b1 to b22 is an integer of 1 or more. The sum of b1 to b22 is preferably 25 or less, and the sum of b23 and b24 is preferably 8 or less. Each of n1 to n65 is independently 0, 1, or 2. X is an oxygen atom or a single bond.)

In the above formula, the repeating units on the left side of "-X-" may be bonded randomly, and the repeating units on the right side of "-X-", the [CF(CF₃)] unit and the (CHₙ₆₅F₂₋ₙ₆₅) unit, may also be bonded randomly.

Among such fluorine-containing substituents represented by Rf, the fluoro(poly)ether-containing organic group (perfluorooxyalkyl group or polyfluorooxyalkyl group) is more preferably a group represented by any one of the following formulas (3), (4), or (5).

Formula (3): F[CF(CF₃)CF₂O]_{c1}[CF(CF₃)CH₂O]₂(CF₂)_{c3}(CH₂)_{c4}-

-In the formula, c1 to c4 are each an integer of 0 or more, c1+c2 is an integer of 1 or more, and c3+c4 is an integer of 0 or more. c1+c2 is preferably 25 or less, more preferably 15 or less, and further preferably 9 or less. c3+c4 is preferably 8 or less. In addition, the repeating units in F[CF(CF₃)CF₂O]_{c1}[CF(CF₃)CH₂O]_{c2}(CF₂)_{c3}(CH₂)_{c4}- may be randomly bonded.

Formula (4) :F(CF₂O)_{d1}(CF₂CF₂O)_{d2}(CF₂CF₂CF₂O)_{d3}[CF(CF₃)CF₂O]_{d4}(CF₂)_{d5}-O- (CH₂)_{d6}-

In the formula, d1 to d6 are integers of 0 or more, and d1+d2+d3+d4 are integers of 1 or more. d1+d2+d3+d4 is preferably 25 or less, more preferably 15 or less, and further preferably 9 or less. d6 is preferably 8 or less. In addition, the repeating units in F(CF₂O)_{d1}(CF₂CF₂O)_{d2}(CF₂CF₂CF₂O)_{d3}[CF(CF₃)CF₂O]_{d4}(CF₂)ₐ₅ may be randomly bonded.

Formula (5) : F(CF₂)ₑ₁(CH₂)ₑ₂-O-(CH₂)ₑ₃-

In the formula, e1 and e2 are each an integer of 1 or more, and e3 is an integer of 0 or more. e1 is preferably 8 or less, and e2 and e3 are each preferably 6 or less.

Particularly preferable fluoro(poly)ether-containing organic groups include the following.

F[CF(CF₃)CF₂O]_{f}CF(CF₃)CF₂O(CH₂)₃-

F[CF(CF₃)CF₂O]_{f}CF(CF₃)CH₂o(CH₂)₃-

F[CF(CF₃)CF₂O]_{f}(CF₂)₂(CH₂)₂-

F(CF₂O)_{g}[CF(CF₃)CF₂O]ₕCF₂-O-(CH₂)₃-

F(CF₂O)_{g}(CF₂CF₂O]ₕCF₂-O-(CH₂)₃-

F(CF₂)ᵢ(CH₂)₂O(CH₂)₃-

F(CF₂)ᵢ(CH₂)₂-

In the above formula, "f" is preferably 1 to 20, more preferably 2 to 12, and most preferably 3 to 9. g+h is preferably 1 to 20, more preferably 2 to 12, and most preferably 3 to 9. "i" is preferably 15 or less, more preferably 10 or less, and most preferably 6 or less.

Specific examples of the component (A) fluorine-containing organopolysiloxane include those represented by the following formula. 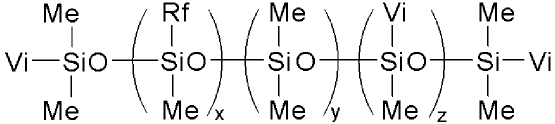 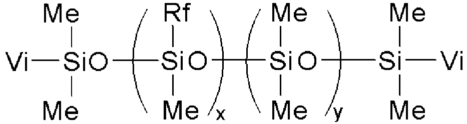 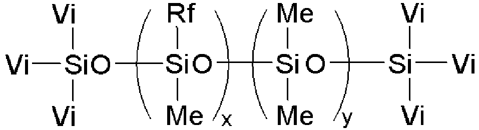 In the formula, Rf, "x", "y", and "z" are as defined above, Me represents a methyl group, and Vi represents a vinyl group.

The component (A) fluorine-containing organopolysiloxane is required to have a fluorine content in its molecule of 25 to 50 mass%, preferably 30 to 48 mass%, and more preferably 35 to 46 mass%. When the fluorine content in component (A) is less than 25 mass%, the release force of the cured film to be obtained will be high against the silicone adhesive. When it is more than 50 mass%, the composition will be insoluble in non-fluorine-based solvents.

Furthermore, the component (A) fluorine-containing organopolysiloxane is required to be a fluorine-containing organopolysiloxane in which the peak area of components with molecular weight of 4,000 or less (for example, components with molecular weight greater than 0 and not more than 4,000) is 2 to 20% (area %) of the total peak area (i.e., the peak area of the entire component (A)) based on molecular weight distribution measurement by gel permeation chromatography (GPC) analysis. When the peak area of components with molecular weight of 4,000 or less is less than 2% of the total peak area by GPC analysis, solubility in a non-fluorine-based solvent and coatability to a base material get worse. When it is more than 20% of the total peak area by GPC analysis, adhesiveness to a base material gets worse and a decrease in the residual adhesion ratio becomes large.

In the present invention, the peak area ratio of a component having a molecular weight of 4,000 or less means the ratio of the peak area (area %) of components in the lower molecular weight region than a border peak corresponding to molecular weight 4,000 (i.e., components having a molecular weight of more than 0 and not more than 4,000) relative to the peak area (total peak area) of all components contained in the component (A) fluorine-containing organopolysiloxane, in a molecular weight distribution measurement by gel permeation chromatography (GPC) analysis, for example, using a fluorine-based solvent such as hydrochlorofluorocarbon (HCFC)-225 as a developing solvent and using polymethyl methacrylate (PMMA) as a standard sample.

One kind of the component (A) fluorine-containing organopolysiloxane may be used alone, or two or more kind thereof may be used in combination.

### [Component (B)]

The component (B) organohydrogenpolysiloxane has at least three hydrogen atoms (SiH groups) bonded to a silicon atom in one molecule, and these SiH groups undergo a hydrosilylation addition reaction with the alkenyl groups in the component (A), crosslinking and curing to form a cured film.

The component (B) organohydrogenpolysiloxane may be linear, cyclic, branched, or have a three-dimensional network structure. In addition, the organohydrogenpolysiloxane may have, in its molecule, a fluorine-containing substituent (i.e., a monovalent hydrocarbon group which may contain an ether-bonded oxygen atom "-O-" in which some or all of the hydrogen atoms bonded to a carbon atom are substituted with a fluorine atom) that is same as Rf in the formula (1) of the component (A) above (i.e., it may be a fluorine-containing organohydrogenpolysiloxane). However, for example, the preferably used organohydrogenpolysiloxane is a linear organohydrogenpolysiloxane which is represented by the following formula, in which the main chain of the molecular chain includes repeating of difunctional organo(hydrogen)siloxane units or a copolymer of difunctional organo(hydrogen)siloxane units and difunctional diorganosiloxane units; the both molecular chain ends are blocked with a triorganosiloxy group or a diorgano(hydrogen)siloxy group; and there are at least 3 hydrogen atoms (SiH groups) bonded to a silicon atom at non-end of the molecular chain (in the middle of the molecular chain) in its molecule, or at least 3 hydrogen atoms (SiH groups) in its molecule in total including hydrogen atom(s) (SiH group(s)) bonded to a silicon atom at non-end of the molecular chain (in the middle of the molecular chain) and hydrogen atom(s) (SiH group(s)) bonded to a silicon atom at both ends of the molecular chain (i.e., an organo(hydrogen)polysiloxane with both molecular chain ends blocked with a triorganosiloxy group, a diorganosiloxane/organo(hydrogen)siloxane copolymer with both molecular chain ends blocked with a triorganosiloxy, diorganopolysiloxane with both molecular chain ends blocked with a diorgano(hydrogen)siloxy group, organo(hydrogen)polysiloxane with both molecular chain ends blocked with a diorgano(hydrogen)siloxy group, a diorganosiloxane/organo(hydrogen)siloxane copolymer with both molecular chain ends blocked with a diorgano(hydrogen)siloxy group).

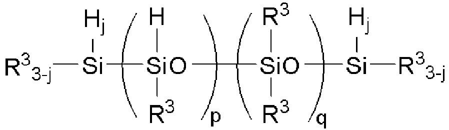

In the above formula, R³ is at least one group selected from the same groups as R² and Rf in the formula (1) above; "j" is 0 or 1; and p and q are integers satisfying p≥1 and q≥0 respectively, preferably p is an integer from 3 to 150 and q is an integer from 0 to 150, more preferably p is an integer from 10 to 100 and q is an integer from 10 to 100, provided that p is a number such that the number of hydrogen atoms (SiH groups) bonded to silicon atoms in the molecule is 3 or more.

Specific examples of the component (B) organohydrogenpolysiloxane include those represented by the following formula: 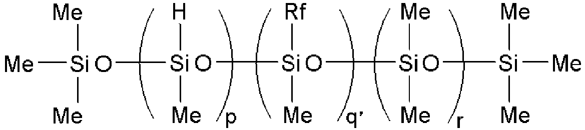 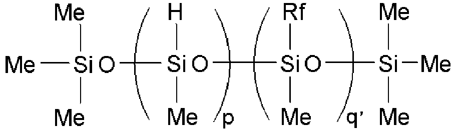 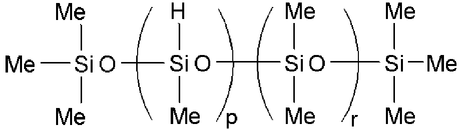 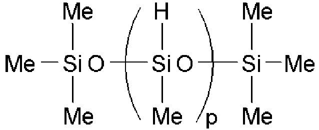 In the formula, Me represents a methyl group, "p" means the same as above, "q'" represents an integer of 1 to 100, "r" represents an integer of 1 to 100, and q'+r represents an integer of 2 to 150.

The blending amount of the component (B) organohydrogenpolysiloxane is an amount such that the mole ratio of the hydrogen atoms (SiH groups) bonded to a silicon atom in the component (B) to the alkenyl groups in the component (A) is 0.1 to 15 (mol/mol), preferably 0.3 to 10, and more preferably 0.5 to 5. When the mole ratio of the SiH groups in the component (B) to the alkenyl groups in the component (A) is less than 0.1, or is more than 15, curability of the targeted releasable addition-curable silicone composition for a silicone adhesive deteriorates, and the physical properties of the cured product deteriorates.

One kind of the component (B) organohydrogenpolysiloxane may be use alone or two or more kinds thereof may be used in combination.

### [Component (C)]

The component (C) platinum group metal-based catalyst is a catalyst for promoting the hydrosilylation addition reaction between the alkenyl group in the component (A) and the SiH group in the component (B), and publicly known reaction catalysts can be used. Examples of such platinum group metal-based catalyst include platinum-based catalysts, palladium-based catalysts, and rhodium-based catalysts. Among these, platinum-based catalysts are particularly preferable. Examples of such platinum-based catalysts include chloroplatinic acid, alcohol solution of chloroplatinic acid, and complexes of chloroplatinic acid and various olefins or vinylsiloxanes.

The adding amount of the platinum group metal-based catalyst may be a catalytic amount, but from the viewpoint of reactivity and economy when obtaining a cured film, the amount is 0.5 to 5,000 ppm, preferably 1 to 1,000 ppm, and more preferably 5 to 300 ppm, in terms of the mass of platinum group metal relative to the component (A). When it is less than 0.5 ppm, the curability and the adhesiveness to a base material is reduced. When it is more than 5,000 ppm, the pot life of the treatment bath becomes shorter.

### [Component (D)]

The component (D) is a non-fluorine-based solvent (i.e., an organic solvent that does not have a fluorine atom in its molecule), and the SP value of the non-fluorine-based solvent is preferably 10.0 or less, more preferably 9.5 or less, further preferably 9.0 or less. When the SP value of the component (D) non-fluorine-based solvent is 10.0 or less, the component (A) fluorine-containing organopolysiloxane can be sufficiently dissolved. The lower limit of the SP value is not particularly limited, but it can be set to, for example, 5.0 or more, preferably 6.0 or more, and more preferably 7.0 or more.

The non-fluorine-based solvents as the component (D) are preferably hydrocarbon solvents, ketone solvents, ether solvents, or ester solvents. Specific examples include: aliphatic hydrocarbon solvents such as hexane, heptane, octane, isooctane, nonane, isononane, decane, cyclohexane, methylcyclohexane, petroleum benzine, ligroin, industrial gasoline, and naphtha solvent; aromatic hydrocarbon solvents such as toluene and xylene; ketone solvents such as acetone, methyl ethyl ketone, 2-pentanone, 3-pentanone, 2-hexanone, 3-hexanone, 2-heptanone, 3-heptanone, 4-heptanone, methyl isobutyl ketone, diisobutyl ketone, and cyclohexanone; ester solvents such as methyl acetate, ethyl acetate, propyl acetate, isopropyl acetate, butyl acetate, isobutyl acetate, and methyl propionate; ether solvents such as diethyl ether, dipropyl ether, diisopropyl ether, dibutyl ether, 1,2-dimethoxyethane, and 1,4-dioxane. One of these may be used alone or two or more thereof may be used.

The amount of the non-halogen-based solvent used as component (D) is preferably an amount that makes the viscosity of the diluted silicone composition 100 cp or less, from the viewpoint of workability in applying the silicone composition dissolved therein and ease of control of the amount to be applied, and is 100 to 20,000 parts by mass, preferably 500 to 15,000 parts by mass, more preferably 800 to 12,000 parts by mass, and further preferably 1,000 to 3,000 parts by mass, relative to 100 parts by mass of the component (A).

### [Other components]

The inventive releasable addition-curable silicone composition for a silicone adhesive is obtained by blending predetermined amounts of the above components (A) to (D). In addition to the above components, it is possible to add other optional components, activity control agents such as various organic nitrogen compounds, organic phosphorus compounds, organic silicon compounds, acetylene compounds and oxime compounds, for example, for the purpose of controlling the catalytic activity of the platinum group metal-based catalyst. Among the activity control agents, those preferably used are acetylene compounds such as 3-methyl-1-butyn-3-ol and silylated products thereof, and silicon compounds such as divinyltetramethyldisiloxane and tetravinyltetramethylcyclotetrasiloxane.

The activity control agent is preferably added in an amount of 0.05 to 3 parts relative to 100 parts of the component (A). When it is 0.05 parts or more, the targeted silicone composition will not gel. When it is 3 parts or less, curing of the silicone composition is not inhibited. Further, the amounts of other optional components added can be set to normal amounts depending on the purpose.

### [Preparation of releasable addition-curable silicone composition for a silicone adhesive]

When preparing the inventive releasable addition-curable silicone composition for a silicone adhesive, it is preferable to first mix components (A), (B) and (D) uniformly and then add component (C) immediately before use. Each of the components may be used alone or two or more kinds thereof may be used in combination.

### [Silicone Cured Film]

The base material on which the inventive releasable addition-curable silicone composition for a silicone adhesive is applied may be selected from paper, plastic film, metal, cloth, glass, etc. Examples of the plastic films include polyester, polypropylene, polyethylene, polystyrene, polycarbonate, polyvinyl alcohol, an ethylene-vinyl acetate copolymer, an ethylene-vinyl alcohol copolymer, polyvinyl chloride, polyvinylidene chloride, polytetrafluoroethylene, polyimide, polyamide, polyphenylene sulfide, etc. Examples of the paper include: paper base materials such as glassine paper, craft paper, clay-coated paper; and laminated paper base materials such as polyethylene-laminated fine paper and polyethylene-laminated craft paper. Examples of the metals include aluminum foil, copper foil, gold foil, silver foil, etc. Examples of the cloth include natural fiber cloth, synthetic fiber cloth, and artificial leather, etc. As for the glass, there are no particular limitation on the thickness or the type of glass. It may be chemically strengthened or surface-treated, and glass fiber may also be used.

The method for applying the releasable addition-curable silicone composition for a silicone adhesive to these base materials can be any known method such as a method using a bar coater, a roll coater, a gravure coater, a knife coater, a blade coater, or a spin coater, dipping application, cast coating, etc.

The curing conditions for the inventive releasable addition-curable silicone composition for a silicone adhesive include, but are not limited to, heating a base material onto which the silicone composition has been applied at a temperature of 80 to 250°C for 1 to 120 seconds, or volatilizing the non-halogen-based solvent and then curing the composition by irradiation with ultraviolet light from an ultraviolet irradiation device such as a high-pressure mercury lamp for 0.2 seconds or more.

The inventive releasable addition-curable silicone composition for a silicone adhesive provides a cured film that is excellent in coatability to a base material, adhesiveness, and releasability, and is therefore suitable for use as a release paper for adhesive tapes and adhesive labels, as the releasable for molds to mold rubber and plastics, as a fiber treatment agent for paper and cloth, as a water repellent for food packaging, and as oil repellent, and use for heat resistant coating.

### EXAMPLE

Hereinafter, the present invention will be specifically described by showing Synthesis Examples, Examples, and Comparative Examples. However, the present invention is not limited to the following Examples. Incidentally, "part(s)" means "part(s) by mass".

### [Molecular Weight Distribution Measurement]

For the component (A) fluorine-containing organopolysiloxane, the molecular weight distribution was measured using gel permeation chromatography (GPC) under the conditions shown below, and for each fluorine-containing organopolysiloxane, the ratio (%) of the peak area of components having a molecular weight of more than 0 and not more than 4,000 relative to the total peak area in the molecular weight distribution measurement by GPC was calculated.

### Measurement conditions

Developing solvent: Hydrochlorofluorocarbon (HCFC)-225 Flow rate: 1 mL/min

Detector: Evaporative light scattering detector

Column: Two columns of TSKgel MultiporeHXL-M (7.8 mm ϕ x 30 cm) manufactured by Tosoh Corporation are used Column temperature: 35°C

Sample injection amount: 100 µL (0.1 mass% solution) Standard sample: PMMA CALIBRATION KIT M-L-10, manufactured by Agilent Technologies Inc.

### (Synthesis Example 1) Synthesis of fluorine-containing organopolysiloxane (A-1)

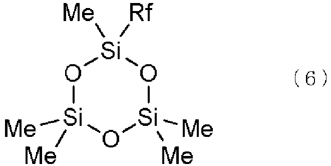

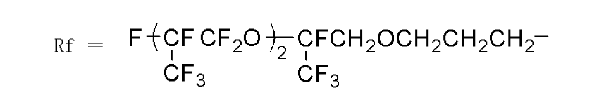

Me represents a methyl group. 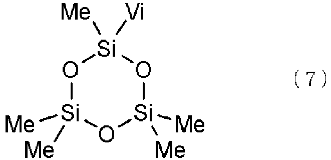 Vi represents a vinyl group.

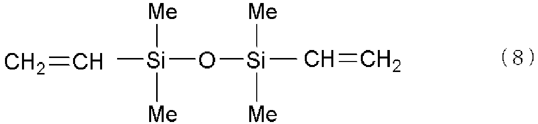

100 parts of cyclotrisiloxane (6) having a fluorine-containing substituent, 0.27 parts of cyclomethylvinyltrisiloxane (7), and 0.21 parts of 1,1,3,3-tetramethyl-1,3-divinyldisiloxane (8) were mixed and stirred, 0.01 parts of trifluoromethanesulfonic acid was added to the mixture, and the mixture was allowed to react (equilibrate) at 50°C for 7 hours. Thereafter, 0.2 parts of 28% aqueous ammonia was added and stirred at room temperature for 1 hour, and the formed salt was filtered with filter paper, stripped at 200°C and 3 mmHg for 30 minutes, and then subjected to GPC measurement. When the area of the component having a molecular weight of more than 0 and not more than 4,000 in the GPC measurement was not within the range of 2 to 20% of the total peak area, stripping was performed again under the same conditions, and GPC measurement was performed. This procedure was repeated until the area of components having a molecular weight of more than 0 and not more than 4,000 in the GPC measurement fell within the range of 2 to 20% of the total peak area to obtain the fluorine-containing organopolysiloxane (A-1) shown in Table 1. The fluorine content of the fluorine-containing organopolysiloxane was 44.0 mass%, and the peak area of components having a molecular weight of 4,000 or less in the total peak area in the GPC measurement was 14%.

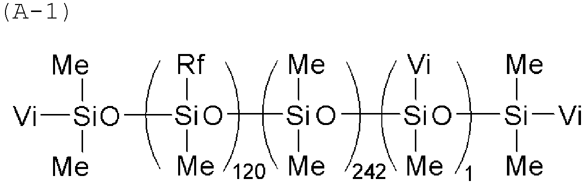

### (Synthesis Example 2) Synthesis of fluorine-containing organopolysiloxane (A-2)

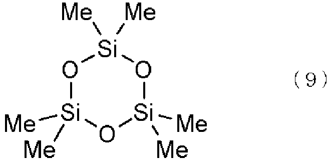

A fluorine-containing organopolysiloxane (A-2) was synthesized in the same manner as in Synthesis Example 1, except that 100 parts of cyclotrisiloxane (6) having a fluorine-containing substituent, 0.36 parts of cyclomethylvinyltrisiloxane (7), 0.28 parts of 1,1,3,3-tetramethyl-1,3-divinyldisiloxane (8), and 10.2 parts of cyclodimethyltrisiloxane (9) were used. The fluorine content of the fluorine-containing organopolysiloxane was 40.0 mass%, and the peak area of components having a molecular weight of 4,000 or less in the total peak area in the GPC measurement was 8%.

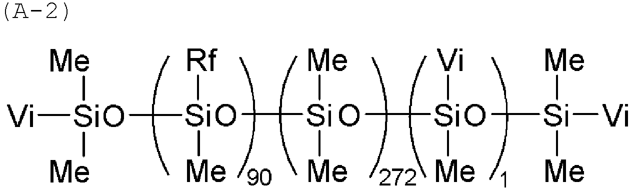

### (Synthesis Example 3) Synthesis of fluorine-containing organopolysiloxane (A-3)

A fluorine-containing organopolysiloxane (A-3) was synthesized in the same manner as in Synthesis Example 1, except that 100 parts of cyclotrisiloxane (6) having a fluorine-containing substituent, 0.49 parts of cyclomethylvinyltrisiloxane (7), 0.39 parts of 1,1,3,3-tetramethyl-1,3-divinyldisiloxane (8), and 25.4 parts of cyclodimethyltrisiloxane (9) were used. The fluorine content of the fluorine-containing organopolysiloxane was 35.0 mass%, and the peak area of components having a molecular weight of 4,000 or less in the total peak area in the GPC measurement was 16%.

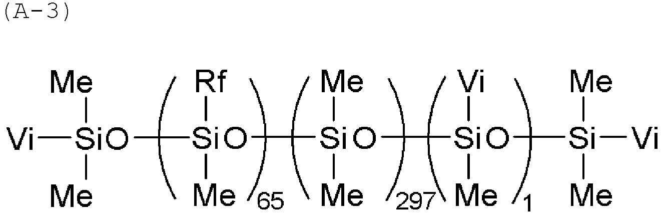

### (Synthesis Example 4) Synthesis of fluorine-containing organopolysiloxane (A-4)

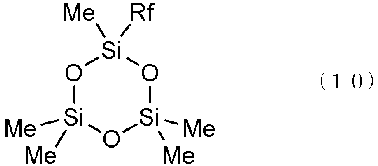

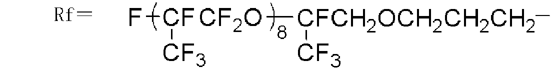

A fluorine-containing organopolysiloxane (A-4) was synthesized in the same manner as in Synthesis Example 1, except that 100 parts of cyclotrisiloxane (10) having a fluorine-containing substituent, 0.22 parts of cyclomethylvinyltrisiloxane (7), 0.17 parts of 1,1,3,3-tetramethyl-1,3-divinyldisiloxane (8), and 11.8 parts of cyclodimethyltrisiloxane (9) were used. The fluorine content of the fluorine-containing organopolysiloxane was 52.0 mass%, and the peak area of components having a molecular weight of 4,000 or less in the total peak area in GPC measurement was 8%.

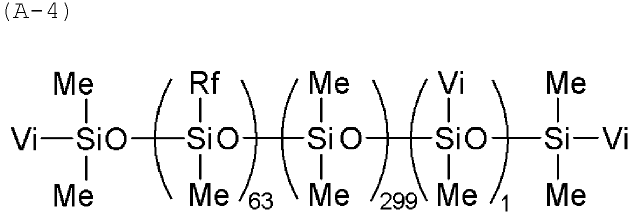

### (Synthesis Example 5) Synthesis of fluorine-containing organopolysiloxane (A-5)

A fluorine-containing organopolysiloxane (A-5) was synthesized in the same manner as in Synthesis Example 1, except that 100 parts of cyclotrisiloxane (6) having a fluorine-containing substituent, 1.52 parts of cyclomethylvinyltrisiloxane (7), 1.21 parts of 1,1,3,3-tetramethyl-1,3-divinyldisiloxane (8), and 141.9 parts of cyclodimethyltrisiloxane (9) were used. The fluorine content of the fluorine-containing organopolysiloxane was 18.0 mass%, and the peak area of components having a molecular weight of 4,000 or less in the total peak area in GPC measurement was 14%.

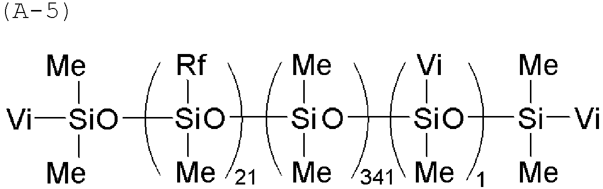

### (Synthesis Example 6) Synthesis of fluorine-containing organopolysiloxane (A-6)

A fluorine-containing organopolysiloxane (A-6) was synthesized in the same manner as in Synthesis Example 1, except that the process was repeated until the peak area of components having a molecular weight of 4,000 or less in GPC measurement was less than 2% of the total peak area. The fluorine content of the fluorine-containing organopolysiloxane was 44.0 mass%, and the peak area of components having a molecular weight of 4,000 or less in the total peak area in GPC measurement was 0.5%.

### (Synthesis Example 7) Synthesis of fluorine-containing organopolysiloxane (A-7)

A fluorine-containing organopolysiloxane (A-7) was synthesized in the same manner as in Synthesis Example 1, except that the stripping was performed only for 30 minutes at 100 °C and 30 mmHg. The fluorine content of the fluorine-containing organopolysiloxane was 44.0 mass%, and the peak area of components having a molecular weight of 4,000 or less in the total peak area in GPC measurement was 28%.

### (Synthesis Example 8) Synthesis of fluorine-containing organohydrogenpolysiloxane (B-1)

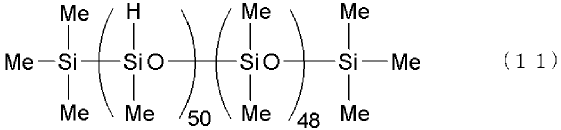

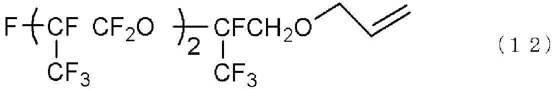

100 parts of organohydrogenpolysiloxane (11) and 194 parts of allyl ether (12) of perfluoropolyether were mixed and stirred, and an addition reaction was carried out using platinum vinylsiloxane complex CAT-PL-50T (manufactured by Shin-Etsu Chemical Co., Ltd.) as a catalyst. The mixture was treated with activated carbon, filtered, and stripped to obtain fluorine-containing organohydrogenpolysiloxane (B-1) represented by the following molecular formula.

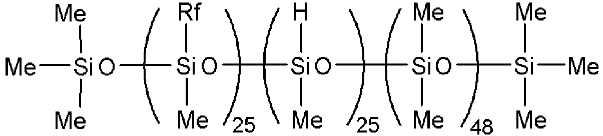

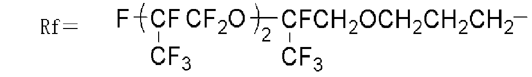

### (Examples and Comparative Examples)

Each of organopolysiloxanes containing an alkenyl substituent and a fluorine-containing substituent described by (A-1) to (A-7) above was mixed with organohydrogenpolysiloxane (B-1) so that the mole ratio of hydrogen atoms bonded to a silicon atom in the component (B) to the vinyl groups in the component (A) (the mole ratio of Si-H groups/Si-CH=CH₂ groups) was 3.0. 100 parts of the mixture was diluted with 1,900 parts of a non-halogen-based solvent (isooctane:isobutyl acetate=1:1), and a complex salt of chloroplatinic acid and vinylsiloxane was added to the diluted mixture in an amount of 30 ppm in term of platinum mass relative to the component (A) (Tables 1 and 2).

The silicone composition solution obtained in this way was measured for solubility in non-fluorine-based solvents, coatability onto a film base material, adhesiveness, release force, and residual adhesion ratio using the methods described below. The results are shown in Table 3.

### (a)Solubility

50 g of the samples (solid concentration 5%) prepared in the above Examples and Comparative Examples were placed in a 100 ml glass bottle with a transparent lid, shaken for 5 minutes in a shaker, and then the appearance of the samples were observed. "Good": transparent, "Fair": slightly cloudy, "Poor": cloudy or separated

### (b) Coatability onto a Film Base Material

The samples prepared in the above Examples (dilution solvent: isooctane/isobutyl acetate = 50:50) were applied onto a 50 µm thick PET film using a bar coater so that the coating amount was 0.3 g/m². The appearance of the film after coating was observed. "Good": No liquid repellency or uneven coating "Fair": Some liquid repellency or uneven coating "Poor": Liquid repellency or uneven coating

### (c) Adhesiveness to a Base Material

The film obtained in the above (b) was heated and cured in a hot air dryer at 150°C for 60 seconds to form a release layer. The film with the release layer formed was stored at room temperature for 24 hours, and then the release layer was rubbed with a finger 10 times and visually observed to see if it fell off.
"Good": No falling off
"Fair": The color of the film changed, but no falling off
"Poor": Falling off

### (d) Release Force

A 25 mm wide silicone adhesive tape (Kapton Tape 650S, manufactured by Teraoka Manufacturing Co., Ltd.) was laminated onto the release film obtained in (c), and the tape was left laminated to age at 25°C and 70°C for 20 hours respectively under a load of 20 g/cm². The laminated tape was peeled off at an angle of 180 degrees at a peeling speed of 0.3 m/min using a tensile tester, and the force required for peeling (N/25mm) was measured.
"Good": Less than 0.2 N/25mm
"Fair": 0.2 N/25mm or more, less than 1.0 N/25mm
"Poor": 1.0 N/25mm or more

### (e) Residual Adhesion Ratio

The same adhesive tape as used in the release force measurement was attached to the release film obtained in (c) and left laminated to age at 25°C for 20 hours under a load of 20 g/cm². After aging, the adhesive tape was peeled off and attached to a SUS plate. This adhesive tape was peeled off at an angle of 180 degrees at a peeling speed of 0.3 m/min using a tensile tester, and the force required for peeling (N/25mm) was measured. Meanwhile, the force required to peel the adhesive tape that had not been attached to the release film from the SUS plate (N/25mm) was measured, and the ratio of these was expressed as a percentage.
"Good": 90% or more
"Fair": 75% or more, less than 90%
"Poor": Less than 75%

**[Table 1]**

| Example | | 1 | 2 | 3 |
|---|---|---|---|---|
| Component (A) | A-1 | 94.8 parts | | |
| | A-2 | | 93.8 parts | |
| | A-3 | | | 92.6 parts |
| Component (B) | B-1 | 5.2 parts | 6.2 parts | 7.4 parts |
| Si-H/Si-CH=CH₂ | | 3.0 | 3.0 | 3.0 |
| Component (C) | Chloroplatinic acid (amount of platinum) | 30 ppm | 30 ppm | 30 ppm |
| Component (D) | Isooctane | 950 parts | 950 parts | 950 parts |
| | Isobutyl acetate | 950 parts | 950 parts | 950 parts |

**[Table 2]**

| Comparative Example | | 1 | 2 | 3 | 4 |
|---|---|---|---|---|---|
| Component (A) | A-4 | 96.2 parts | | | |
| | A-5 | | 88.7 parts | | |
| | A-6 | | | 94.4 parts | |
| | A-7 | | | | 95.3 parts |
| Component (B) | B-1 | 3.8 parts | 11.3 parts | 5.6 parts | 4.7 parts |
| Si-H/Si-CH=CH₂ | | 3.0 | 3.0 | 3.0 | 3.0 |
| Component (C) | Chloroplatinic acid (amount of platinum) | 30 ppm | 30 ppm | 30 ppm | 30 ppm |
| Component (D) | Isooctane | 950 parts | 950 parts | 950 parts | 950 parts |
| | Isobutyl acetate | 950 parts | 950 parts | 950 parts | 950 parts |

**[Table 3]**

| Sample | Solubility | Coatability | adhesiveness | Release force [N/25mm] | | Residual adhesion ratio [%] |
|---|---|---|---|---|---|---|
| | | | | 25°C/1 day | 70°C/1 day | |
| Example1 | Good | Good | Good | Good 0.03 | Good 0.06 | Good 97 |
| Example2 | Good | Good | Good | Good 0.04 | Good 0.07 | Good 98 |
| Example3 | Good | Good | Good | Good 0.07 | Good 0.10 | Good 95 |
| Comparative Example 1 | Poor | - | - | - | - | - |
| Comparative Example 2 | Good | Good | Good | Poor 3.42 | Poor 4.03 | Poor 43 |
| Comparative Example 3 | Fair | Fair | Good | - | - | - |
| Comparative Example 4 | Good | Good | Poor | Good 0.03 | Good 0.06 | Fair 85 |

For Comparative Example 1, because it was not dissolved in a non-fluorine-based solvent, it was not possible to measure the coatability, adhesiveness, release force, and residual adhesion ratio. For Comparative Example 2, because the fluorine content was less than 25 mass%, the release force was heavy and the residual adhesion ratio was also low. For Comparative Example 3, because the ratio of the peak area of components with a molecular weight of 4,000 or less to the total peak area in the GPC measurement was less than 2%, the solubility and coatability were poor, and it was not possible to measure the release force and residual adhesion ratio. For Comparative Example 4, because the ratio of the peak area of components with a molecular weight of 4,000 or less to the total peak area in the GPC measurement was more than 20%, the adhesiveness was poor and the residual adhesion ratio was low.

Compared to these Comparative Examples, the samples of Examples were excellent in solubility in non-fluorine-based solvents, coatability to a base material, and adhesiveness, and also exhibited light release from a silicone adhesive and a high residual adhesion ratio. The results showed that for the inventive releasable addition-curable silicone composition for a silicone adhesive, the fluorine content of the base polymer component (A) and the amount of components with a molecular weight of 4,000 or less are extremely important as a release agent for a silicone adhesive.

The present description includes the following embodiments.
[1]: A releasable addition-curable silicone composition for a silicone adhesive comprising the following components (A) to (D):
   (A) a fluorine-containing organopolysiloxane having at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography: 100 parts by mass;
   (B) an organohydrogenpolysiloxane having at least three hydrogen atoms (SiH groups) bonded to a silicon atom in one molecule: an amount at which a mole ratio of the hydrogen atoms (SiH groups) bonded to a silicon atom in the component (B) relative to the alkenyl groups in the component (A) is 0.1 to 15;
   (C) a platinum group metal-based catalyst : 0.5 to 5,000 ppm in terms of the mass of the platinum group metal relative to the component (A); and
   (D) a non-fluorine-based solvent: 100 to 20,000 parts by mass.
[2]: The releasable addition-curable silicone composition for a silicone adhesive according to the above [1], wherein the mole ratio of the hydrogen atoms (SiH groups) bonded to a silicon atom in the component (B) relative to the alkenyl groups in the component (A) is 0.5 to 5.
[3]: The releasable addition-curable silicone composition for a silicone adhesive according to the above [1] or [2], wherein
   the component (D) is a non-fluorine-based solvent having an SP value of 10.0 or less.
[4]: The releasable addition-curable silicone composition for a silicone adhesive according to the above [1], [2], or [3], wherein the component (D) is at least one kind selected from the group consisting of a hydrocarbon solvent, a ketone solvent, an ether solvent, and an ester solvent.
[5]: A release film having a cured material layer formed of the releasable addition-curable silicone composition for a silicone adhesive according to the above [1], [2], [3], or [4], on at least one outer surface of a film base material.
[6]: A release paper having a cured material layer formed of the releasable addition-curable silicone composition for a silicone adhesive according to the above [1], [2], [3], or [4], on at least one outer surface of a paper base material.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

### INDUSTRIAL APPLICABILITY

Since the inventive releasable addition-curable silicone composition for a silicone adhesive has both high handling properties and good release performance, it can be suitably used as a release agent. A sheet-like base material having a cured film made from the silicone composition is useful for adhesive tapes, adhesive labels, process paper, etc.

## Claims

1. A releasable addition-curable silicone composition for a silicone adhesive comprising the following components (A) to (D):
(A) a fluorine-containing organopolysiloxane having at least two alkenyl groups bonded to a silicon atom and at least one fluorine-containing substituent bonded to a silicon atom in one molecule, wherein a fluorine content is 25 to 50 mass% and a peak area of components with a molecular weight of 4,000 or less is 2 to 20% of a total peak area based on molecular weight distribution measurement by gel permeation chromatography: 100 parts by mass;
(B) an organohydrogenpolysiloxane having at least three hydrogen atoms (SiH groups) bonded to a silicon atom in one molecule: an amount at which a mole ratio of the hydrogen atoms (SiH groups) bonded to a silicon atom in the component (B) relative to the alkenyl groups in the component (A) is 0.1 to 15;
(C) a platinum group metal-based catalyst: 0.5 to 5,000 ppm in terms of the mass of the platinum group metal relative to the component (A); and
(D) a non-fluorine-based solvent: 100 to 20,000 parts by mass.

2. The releasable addition-curable silicone composition for a silicone adhesive according to claim 1, wherein
the mole ratio of the hydrogen atoms (SiH groups) bonded to a silicon atom in the component (B) relative to the alkenyl groups in the component (A) is 0.5 to 5.

3. The releasable addition-curable silicone composition for a silicone adhesive according to claim 1, wherein
the component (D) is a non-fluorine-based solvent having an SP value of 10.0 or less.

4. The releasable addition-curable silicone composition for a silicone adhesive according to claim 2, wherein
the component (D) is a non-fluorine-based solvent having an SP value of 10.0 or less.

5. The releasable addition-curable silicone composition for a silicone adhesive according to claim 1, wherein
the component (D) is at least one kind selected from the group consisting of a hydrocarbon solvent, a ketone solvent, an ether solvent, and an ester solvent.

6. The releasable addition-curable silicone composition for a silicone adhesive according to claim 2, wherein
the component (D) is at least one kind selected from the group consisting of a hydrocarbon solvent, a ketone solvent, an ether solvent, and an ester solvent.

7. The releasable addition-curable silicone composition for a silicone adhesive according to claim 3, wherein
the component (D) is at least one kind selected from the group consisting of a hydrocarbon solvent, a ketone solvent, an ether solvent, and an ester solvent.

8. The releasable addition-curable silicone composition for a silicone adhesive according to claim 4, wherein
the component (D) is at least one kind selected from the group consisting of a hydrocarbon solvent, a ketone solvent, an ether solvent, and an ester solvent.

9. A release film having a cured material layer formed of the releasable addition-curable silicone composition for a silicone adhesive according to any one of claims 1 to 8, on at least one outer surface of a film base material.

10. A release paper having a cured material layer formed of the releasable addition-curable silicone composition for a silicone adhesive according to any one of claims 1 to 8, on at least one outer surface of a paper base material.
